# EUROPEAN PATENT APPLICATION

(11) **EP 3 419 249 A1**
(43) Date of publication of application: **26.12.2018**
(21) Application number: 17177673.5
(22) Date of filing: 23.06.2017
(51) Int. Cl.: H04L 29/08, H04L 29/12

(54) **METHODS OF OPTIMIZING TRAFFIC IN AN ISP NETWORK**

(71) Applicant: Nokia Solutions and Networks Oy, 02610 Espoo (FI)
(72) Inventor: Satzke, Klaus, 70435 Stuttgart (DE)
(74) Representative: Louis Pöhlau Lohrentz

(57) **Abstract**

The present invention discloses a scheme of integrating Information Centric Networking Mechanisms into a Content Distribution Network. Methods are provided respectively for an internet service provider domain name server, ISP DNS, a publisher name server, an auxiliary network node, a client node, and an edge cache. According to the present invention, in a resolution procedure, a client node asks the ISP DNS to resolve a content name, then the ISP DNS queries the publisher name server to get a first resolution result which will be then transmitted by the ISP DNS to the auxiliary network node to obtain a second resolution result. At the end of the resolution procedure, the second resolution result is transmitted back to the client. During a delivery procedure, the client node may transmit a request comprising the content name and the second resolution result to an edge cache that is indicated in the second resolution result. In case of cache miss, the edge cache will forward the request to other edge cache indicated in the second resolution results. Alternatively or additionally, the edge cache may ask an ISP DNS to resolve the content name to get neighboring edge caches holding copies of the content fragment cached from prior requests of other clients.

## Description

### Field of the invention

The invention relates to communication technology, in particular to an internet service provider (ISP) network.

### Background

To cope with the increasing demand for content distribution, today's Content distribution networks (CDN) are in place performing their own traffic optimization while assigning end users to their servers. However, the assignment through CDN is at large unaware of local network conditions and mostly unaware of content popularity, the location of the end user and the location of additional replicas.

Additionally, a CDN often decides redirection of clients to edge caches based on the granularity of an entire asset, a coarse distribution given that an entire video asset can be multiple gigabytes. This can result in reduced performance due to high load of individual edge caches serving highly popular contents or allocated to large video assets, and tromboning.

US 20130227166 discloses that an Information centric networking (ICN) mechanisms is adapted for request routing, transport and caching. It is based on the idea to extend (Internet protocol) IP and encode ICN information into IP option bits. This concept requires upgrades to the existing IP router infrastructure e.g. inside an IP based content router (IP-CR) domain, forwarding information base (FIB) and application pending interest table (A-PIT) have to be added etc.

US20130103791 proposes an enhancement of a CDN by taking advantage of new application layer protocols, such as SPDY. However, this approach assumes the existence of a SPDY-enabled browser and proxies, as well as appropriate server-side support.

According to the state of the art, methods of integrating ICN mechanisms into a CDN often require modifications to the current IP routing infrastructure.

An object of the invention is to improve content delivery performance, reduce infrastructure cost (both transport and processing), improve CDN reliability and cache efficiency without modifying the IP network infrastructure.

### Summary of the Invention

The object of the invention is achieved by the method in the claims.

According to one aspect of the invention, there is provided a method of controlling a resolution in an internet service provider domain name server, ISP DNS, the method comprising steps of: a) receiving from a first network node a first request requesting a resolution of a content name, the first request comprising the content name; b) determining a publisher name server based on the content name comprised in the first request; c) transmitting a second request requesting a resolution of the content name to the publisher name server determined based on the content name, the second request comprising the content name;
d) receiving from the publisher name server a first resolution result indicating the content name and location of a first set of edge cache(s) that is capable of delivering a content fragment related to the content name; e) transmitting the first resolution result to an auxiliary network node configured to optimize the resolution of the content name; f) receiving from the auxiliary network node a second resolution result indicating the content name and location of a second set of edge cache(s) that shall deliver the content fragment related to the content name; g) transmitting the second resolution result to the first network node.

In a preferred embodiment, the first resolution result and the second resolution result are transmitted in a content-denoting DNS resource record type comprising fields indicating content name, content time to live value, and location information of the edge cache(s) that is capable of delivering the content fragment related to the content name.

In a preferred embodiment, the first resolution result and the second resolution result further comprise fields indicating priority, and weight of the edge cache(s).

In a preferred embodiment, the first network node is a client node or an edge cache.

In a preferred embodiment, after step f), the method further comprising a step of: f1) caching the second resolution result in a historical storage; after step a), the method further comprising a step of: a1) determining whether there is an entry of the second resolution result for the content name in the historical storage, a11) if so, the method going on with step g); a12) if not so, the method going on with steps b)-g).

According to another aspect of the present invention, there is provided a method of resolving a content name in a publisher name server, comprising steps of: a) receiving a name-based content location information published by a content provider, b) receiving from an internet service provider domain name server, ISP DNS, a second request requesting a resolution of the content name, the second request comprising the content name; c) determining a first set of edge cache(s) that is capable of delivering a content fragment related to the content name based on the name-based content location information and the content name comprised in the second request; d) transmitting a first resolution result indicating the content name and location of the first set of edge cache(s) to the ISP DNS.

In a preferred embodiment, the name-based content location information comprises entries of a content name and its corresponding location information of an edge cache that is capable of delivering the content fragment related to the content name.

In a preferred embodiment, the name-based content location information further comprises priority, and weight of each edge cache.

In a preferred embodiment, the name-based content location information is updated by the content provider based on a predetermined interval.

In a preferred embodiment, the first resolution result comprises fields indicating content name, location information of at least one edge cache that is capable of delivering the content fragment related to the content name, priority, and weight of each of the edge cache.

According to another aspect of the present invention, there is provided a method of optimizing a resolution of a content name in an auxiliary network node, the auxiliary network node being communicatively connected to an internet service provider domain name server, ISP DNS, and maintaining a historical record of a mapping from a content name to a set of edge cache(s) that is capable of delivering a content fragment related to the content name, the method comprising steps of: a) receiving from the ISP DNS, a first resolution result indicating a content name and location of a first set of edge cache(s) that is capable of delivering a content fragment related to the content name; b) determining whether there is an entry in the historical record for the content name indicated in the first resolution result; b1) if so, obtaining a third set of edge cache(s) corresponding to the content name in the entry, and further determining whether the third set of edge cache(s) is same as the first set of edge cache(s); b11) if so, determining the first set of edge cache(s) or the third set of edge cache(s) as a second set of edge cache(s) that shall deliver the content fragment related to the content name; b12) if not so, determining the second set of edge cache(s) that shall deliver the content fragment related to the content name based on the first set of edge cache(s) and the third set of edge cache(s) together, and adding a new entry comprising the content name and the first set of edge cache(s) into the historical record; b2) if not so, determining the first set of edge caches as the second set of edge cache(s) that shall deliver the content fragment related to the content name, and adding a new entry comprising the content name and the first set of edge cache(s) into the historical record; c) transmitting a second resolution result indicating the second set of edge cache(s) to the ISP DNS.

In a preferred embodiment, the first resolution result and the second resolution result further comprise fields indicating priority, and weight of the edge cache(s), and in step b12), the second set of edge cache(s) that shall deliver the content fragment related to the content name is determined based on priority, and weight of the edge cache(s) comprised in the first set and the third set of edge cache(s).

According to another aspect of the present invention, there is provided a method of requesting a content fragment in a client node, comprising steps of: a) transmitting a first request requesting a resolution of a content name to an internet service provider domain name server, ISP DNS, the first request comprising the content name of the requested content fragment; b) receiving from the ISP DNS a second resolution result indicating the content name and a second set of edge cache(s) that shall deliver the requested content fragment; c) selecting at least one edge cache from the second set of edge cache(s), d) transmitting a third request requesting the content fragment to the selected edge cache(s), the third request comprising the content name and the second set of edge cache(s); e) receiving the requested content fragment from the selected edge cache(s).

According to another aspect of the present invention, there is provided a method of delivering a content fragment in a first edge cache in a content distribution network, the first edge cache maintaining a local content storage, the method comprising steps of: a) receiving a third request requesting the content fragment from a requesting entity, the requesting entity being a client node or a second edge cache, the third request comprising a content name of the requested content fragment; b) determining whether the request content fragment is available in the local content storage of the first edge cache; b1) if so, sending the requested content fragment to the requesting entity; b2) if not so, determining whether the third request comprises a second set of edge cache(s) that shall deliver the requested content fragment; if so, the method going on with steps b21)-b25); b21) selecting at least one third edge cache(s) from the second set of edge cache(s), the third edge cache(s) being different from the first and the second edge cache and any other edge cache that has already received the third request; b22) transmitting the third request to the third edge cache(s); b23) receiving the content fragment from the third edge cache(s); b24) storing the content fragment in the local content storage of the first edge cache; b25) transmitting the content fragment to the requesting entity.

In a preferred embodiment, the first edge cache is communicatively connected to an internet service provider domain name server, ISP DNS, wherein, if it is determined in step b2) that the third request does not comprise a second set of edge cache(s), the method proceeds with steps c)-i): c) transmitting a fourth request requesting a resolution of the content name to the ISP DNS, the fourth request comprising the content name comprised in the third request; d) receiving from the ISP DNS a second resolution result indicating the content name and a second set of edge cache(s) that shall deliver the requested content fragment; e) selecting at least one third edge cache(s) from the second set of edge cache(s), the third edge cache(s) being different from the first and the second edge cache and any other edge cache that has already received the third request; f) transmitting a fifth request requesting the content fragment to the third edge cache(s), the fifth request comprising the content name and the second set of edge cache(s); g) receiving the content fragment from the third edge cache(s); h) storing the content fragment in the local content storage of the first edge cache; i) transmitting the content fragment to the requesting entity.

According to the present invention, the content name resolution capability offers the opportunity to manage content name resolution and delivery on the granularity of individual content names instead of domains.

There is provided a CDN innovation with ICN mechanisms being integrated within a CDN, with no modifications required to the IP network infrastructure, which is why the solutions is incrementally deployable starting from today's deployed CDN and DNS components and calling for upgrades for some selected CDN components in several steps, accruing performance and management flexibility benefits along the way.

According to the present invention, the request routing mechanism and content delivery players are fully controlled by the CDN operator and do not depend on any additional external systems.

Furthermore, Name-based resolution allows for redirection to nearest replica and avoiding unnecessary tromboning due to redirecting name-based requests to the closest location. Besides, through content name resolution and explicit addressing of a nearby cache as alternative source location for the named content based on information provided through the DNS, hairpinning can be avoided.

### Brief description of the figures

The features and advantages of the invention will be more completely understood by appreciating the following detailed description of preferred embodiments with reference to the figures, wherein
Fig. 1 depicts a schematic block diagram of a network topology according to an embodiment of the present invention;
Fig. 2 depicts a signal flow diagram of an embodiment according to an embodiment of the present invention;
Fig. 3 depicts a flow chart of a method of optimizing a resolution of a content name in an auxiliary network node according to an embodiment of the present invention;
Fig. 4 depicts an exemplary format of the first resolution result and the second resolution result;
Fig. 5 depicts a schematic block diagram of a network topology according to another embodiment of the present invention;
Fig. 6 depicts a signal flow diagram of an embodiment according to the embodiment shown in Fig. 5.

Wherein, same or similar reference numerals refer to same or similar parts or components.

### Detailed description

Exemplary embodiments of the present application are described herein in detail and shown by way of example in the drawings. It should be understood that, although specific exemplary embodiments are discussed herein there is no intent to limit the scope of the invention to such embodiments. To the contrary, it should be understood that the exemplary embodiments discussed herein are for illustrative purposes, and that modified and alternative embodiments may be implemented without departing from the scope of the invention. Similarly, specific structural and functional details disclosed herein are merely representative for purposes of describing the exemplary embodiments. The invention described herein, however, may be embodied in many alternate forms and should not be construed as limited to only the embodiments set forth herein.

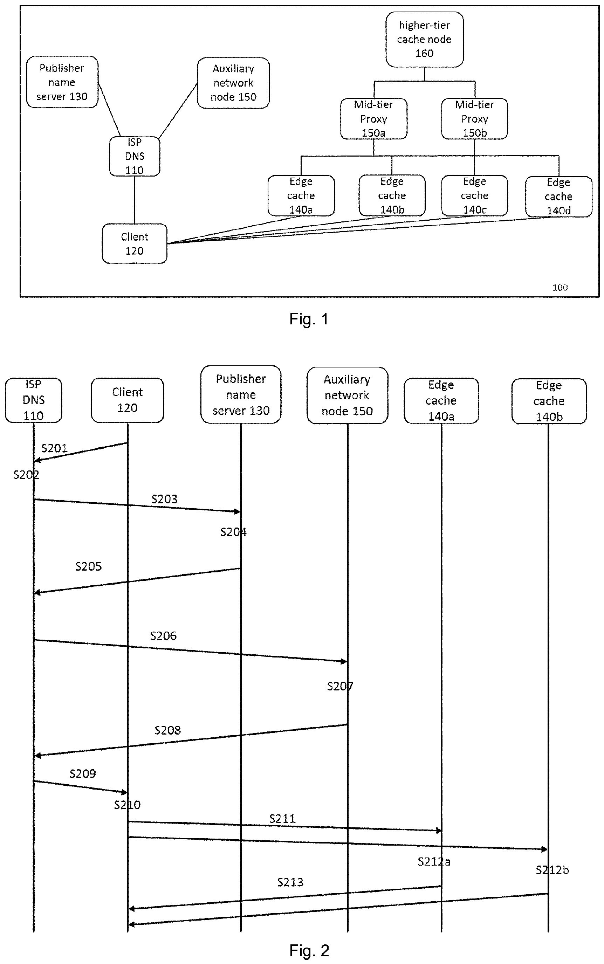

Fig.1 shows a schematic block diagram of a network topology according to an embodiment of the present invention.

The ISP network 100 comprises an internet service provider domain name server ISP DNS 110, a client node 120, a publisher name server 130, a plurality of edge caches 140a, 140b, 140c, 140d (hereafter collectively referred as 140), a plurality of Mid-tier proxies 150a and 150b (hereafter collectively referred as 150) and a higher-tier cache node 160. A skilled person shall understand, the number of the above mentioned network nodes are not limited to the given example. Only the network nodes that are relevant to the present invention are shown in Fig. 1, the network 100 may comprise other network nodes besides those shown in Fig. 1.

As can be seen from Fig. 1, the client node 120 is communicatively connected with the ISP DNS 110. The ISP DNS 110 is communicatively connected with the publisher name server 130 and the auxiliary network node 150. Besides, the client node 120 is also communicatively connected with the plurality of edge caches 140.

In Fig. 1, a CDN organized into a hierarchy is simplified shown as comprising edge caches 140, Mid-tier proxies 150 and a higher-tier cache node 160. The plurality of edge caches 140 are communicatively connected with each other and the mid-tier proxies 150 of higher level. The mid-tier proxies 150 are communicatively connected with each other and the higher-tier cache node 160. A skilled person shall understand, the hierarchy topology here is just shown by way of example. In another embodiment, there might be less or more levels of cache nodes. In each level there may be less or more cache nodes as shown in the given example.

In the ISP network 100 shown in Fig.1, the ISP DNS 110, the publisher name server 130 and the auxiliary network node 150 are working together to resolve a content name provided by the client node 120. In the following, the resolution procedure will be specifically described with respect to Fig. 2.

Fig. 2 shows a signal flow diagram of an embodiment according to an embodiment of the present invention.

The client node 120 gets an instruction from a user to request for a content fragment. In step S201, the client node 120 transmits a first request comprising the content name of the content fragment to the ISP DNS 110, so as to resolve the content name.

In step S202, the ISP DNS 110 determines a publisher name server 130 based on the content name comprised in the first request. A skilled person shall understand, the publisher name server 130 can be determined according any known method, thus this step will not be elaborated in detail here.

In step S203, the ISP DNS 110 transmits a second request requesting a resolution of the content name to the publisher name server determined based on the content name, the second request comprising the content name.

In one embodiment, the first request from the client node 120 to the ISP DNS may be transmitted in form of a HTTP GET message comprising a url address of the requested content fragment, for example GET url [http://vodservice.portl.tv/category /theMovie/aChunk.ts]. Then the ISP DNS 110 process the first request to obtain the content name from the HTTP GET message e.g. in form of an encoded URL containing the components of the initial URL in reversed order and replacing the "/" character against ".": [ts.aChunk/theMovie.category.vodservice.portl.tc], and send the second request comprising the content name to the publisher name server 130 in step S203.

In another embodiment, the first request from the client node 120 to the ISP DNS 110 may be transmitted in form of a hierarchical ICN name request comprising the content name e.g. in form of an encoded reversed URL. Then the ISP DNS 110 forwards the first request as the second request to the publisher name server 130 in step S203. The client node 120 may comprise a proxy node, transmitting a HTTP GET message into an ICN name request.

Previous to step S203, the publisher name server 130 receives a name-based content location information published by a content provider. This step is not shown on the signal flow diagram of Fig. 2. The name-based content location information may be implemented as a table comprising DNS entries. Each entry comprises a content name and its corresponding location information of an edge cache that is capable of delivering the content fragment related to the content name. For one content name, there may be a plurality of entries indicating different edge caches. The DNS entries can be adjusted or modified at any time by the content provider.

In step S204, the publisher name server 130 determines a first set of edge cache(s) that is capable of delivering the content fragment related to the content name based on the name-based content location information and the content name comprised in the second request. For example, this step may be carried out by looking up the table described above.

In step S205, the publisher name server 130 transmits a first resolution result indicating the content name and location of the first set of edge cache(s) to the ISP DNS 110. The first resolution result comprises fields indicating content name, location information of at least one edge cache that is capable of delivering the content fragment related to the content name.

In one embodiment, the name-based content location information is updated by the content provider based on a predetermined interval which is given by the content name Time to Live (TTL).

In another embodiment, name-based content location information further comprises in each entry priority, and weight of the respective edge cache. In that case, the first set of edge cache(s) comprised in the first resolution result may be ranked according to the priority, and weight of each of the edge cache. The first resolution result may comprise fields indicating priority, and weight of each of the edge cache.

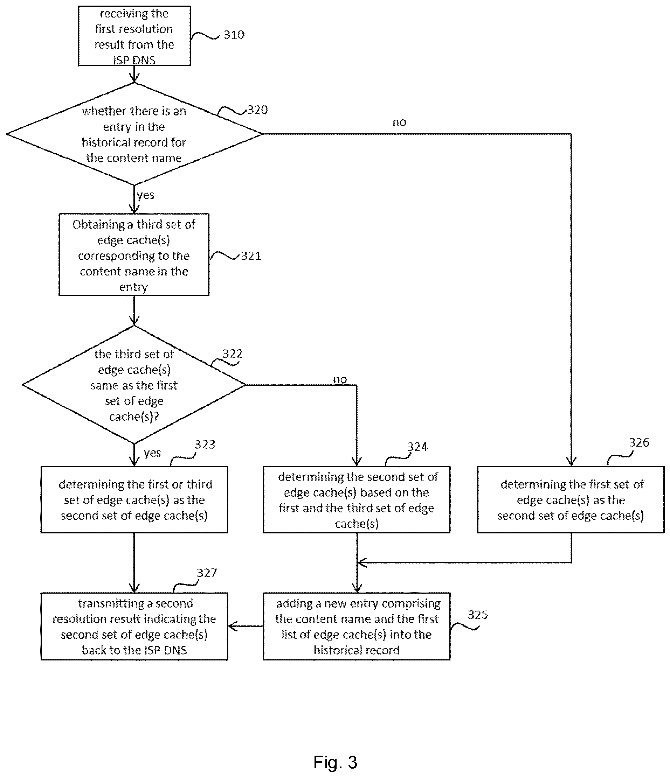

In step S206, the ISP DNS 110 transmits the first resolution result to the auxiliary network node 150. The auxiliary network node 150 is configured to optimize the resolution of the content name. In Fig. 2, the auxiliary network node 150 determines a second resolution result in step S207. The method performed by the auxiliary network node 150 will be described below referring to Fig. 3.

Fig. 3 shows a flow chart of method of optimizing a resolution of a content name in an auxiliary network node 150 according to an embodiment of the present invention. The auxiliary network node 150 maintains a historical record of a mapping from a content name to a set of edge cache(s) that is capable of delivering a content fragment related to the content name.

The method begins with step S310, when the auxiliary network node 150 receives the first resolution result from the ISP DNS 110. Then in step S320, the auxiliary network node 150 determines whether there is an entry in the historical record for the content name indicated in the first resolution result. If so, the method proceeds with step S321, in which the auxiliary network node 150 obtains a third set of edge cache(s) corresponding to the content name in the entry, and further determines in step S322 whether the third set of edge cache(s) is same as the first set of edge cache(s).

If it is determined in step S322 that the third set of edge cache(s) is same as the first set of edge cache(s), the method proceeds with step S323, in which the first set of edge cache(s) or the third set of edge cache(s) is determined as a second set of edge cache(s) that shall deliver the content fragment related to the content name.

If it is determined in step S322 that the third set of edge cache(s) is different from the first set of edge cache(s), the method proceeds with step S324, the second set of edge cache(s) that shall deliver the content fragment related to the content name is determined based on the first set of edge cache(s) and the third set of edge cache(s) together.

In one embodiment, the second set of edge cache(s) may be determined as a combination of the first set and the third set of edge cache(s).

And then in step S325, a new entry comprising the content name and the first set of edge cache(s) is added into the historical record maintained by the auxiliary node 150 for further use.

If in step S320 it is determined there is no entry in the historical record for the content name, the first set of edge caches is determined as the second set of edge cache(s) that shall deliver the content fragment related to the content name. And then the method proceeds with step S325 in which a new entry comprising the content name and the first set of edge cache(s) is added into the historical record maintained by the auxiliary node 150 for further use.

After the second set of edge cache(s) is determined, in step S327 a second resolution result indicating the second set of edge cache(s) is transmitted back to the ISP DNS 110.

A skilled person shall understand, the sequence of the steps is not limited to the given example. In another embodiment, the auxiliary network node 150 may perform step S325 prior to step S324 and/or step S326. Alternatively, the auxiliary network node 150 may perform step S325 after step S327.

The DNS entries in the historical record maintained by the auxiliary node 150 can be adjusted or modified at any time by the ISP so that the CDN can readily adapt to the underlying conditions and dynamics in the ISP network.

In one embodiment, the first resolution result and the second resolution result are transmitted in a content-denoting DNS resource record type comprising fields indicating content name, content time to live value, and location information of the edge cache(s) that is (are) capable of delivering the content fragment related to the content name.

In another embodiment, the first resolution result and the second resolution result further comprise fields indicating priority, and weight of the edge cache(s). In that case, in step b12), the second set of edge cache(s) may be determined based on priority, and weight of the edge cache(s) comprised in the first set and the third set of edge cache(s).

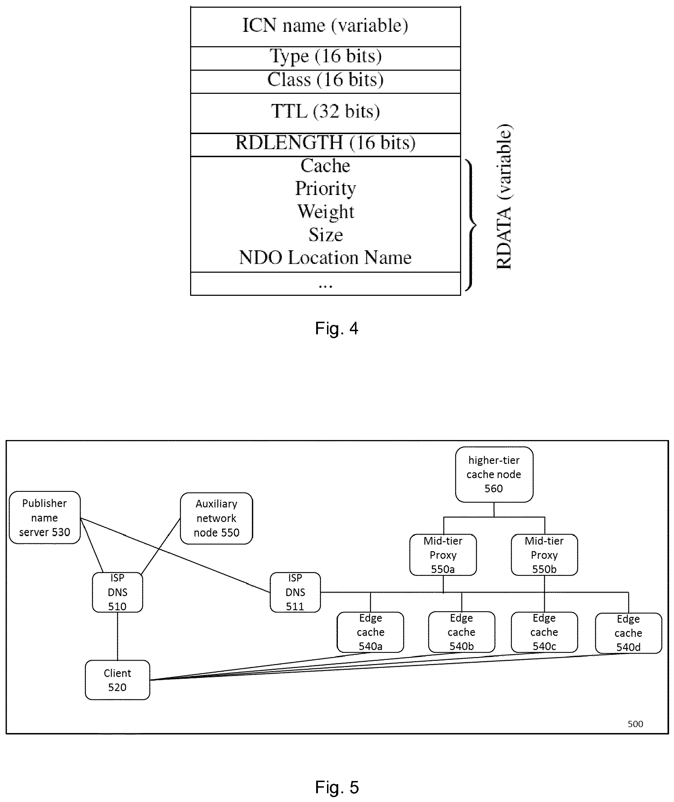

Fig. 4 shows an exemplary format of the first resolution result and the second resolution result. The first resolution result and the second resolution result are transmitted in a content-denoting DNS resource record type.

As can be seen from Fig. 4, in the resource record type there are fields storing the following information per content name (information centric networking, ICN name):
1. Type, Class, Time to live (TTL) data fields and Record Data Length of the named content fragment: A skilled person shall understand, the DNS content record may be deleted from the publisher name server 130, but the historical record maintained by the ISP DNS 110 (will be explained later) and by the auxiliary node 150 will persist and be deleted only after the TTL of the record expires. However, the TTL field here in the present invention does not represent the TTL of a domain, but the TTL of the named content in the respective edge cache.
   The size of the named content piece is useful information for decisions on how to distribute the content in the network.
2. Name Data Object (NDO) Location Name: representation of the location where a client can find the NDO, e.g. the name or identifier of a local cache. There can be multiple locations per name, each with its own priority and weight parameters.
3. Priority of each edge cache: In one embodiment, edge cache with higher priority shall be tried first. In another embodiment, lower value of priority means that the corresponding edge cache is more preferred.
4. Weight: probability of edge cache selection. In one embodiment, this field is used to represent relative weight for different edge caches with the same priority, and higher value means more preferred.

In one embodiment, the second set of edge cache(s) comprised in the second resolution result are be ranked according to the priority, and weight of each edge cache.

Returning to Fig.2, after the second resolution result indicating the content name and location of a second set of edge cache(s) that shall deliver the content fragment related to the content name is transmitted back to the ISP DNS 110 in step S208, the ISP DNS 110 transmits the second resolution result to the client node 120.

In one embodiment, the ISP DNS 110 may also maintain a historical storage. After ISP DNS 110 receives the second resolution result, it may cache the second resolution result in the historical storage. Thus in the future, if the ISP DNS 110 receives a request from the client 120, or another client node, it may look up in its historical storage and determine whether there is an entry of the second resolution result for the content name that the client asks to resolve. If there is an entry, the ISP DNS 110 may directly send the second resolution result to the requesting client, thus saving time querying the publisher name server 130 and the auxiliary network node 150. If in the historical storage maintained by the ISP DNS 110 there is no entry of the second resolution result for the content name that the client asks to resolve, the ISP DNS 110 proceeds with the procedure described above with respect to Fig. 2. However, due to the limited storage, the second resolution result can not be kept forever, it may be deleted from the historical record maintained by the ISP DNS 110 after the TTL expires.

In step S210 the client node 120 selects at least one edge cache from the second set of edge cache(s). In one embodiment, point-to-multipoint communication is supported. The client node 120 triggers parallel delivery of content from multiple sources (hence, over multiple paths) using several TCP sessions in parallel.

In the embodiment shown in Fig. 2, the client node 120 selects two edge caches 140a and 140b, and then in step S211 transmits a third request requesting the content fragment to the selected two edge caches, the third request comprising the content name and the second set of edge caches.

After the edge caches 140a and 140b receive the third request from the client node 120, they determine respectively in step S212a and Step S212b, whether the requested content fragment is available in their local content storage.

In the embodiment shown in Fig. 2, the edge caches 140a and 140b both have the requested content fragment in their local content storage. Then in step S213, the edge caches 140a and 140b transmit the requested content fragment to the client node 120.

The distribution of content over a multitude of servers also helps to avoid overloading of certain edge caches in case of popular content.

However, in another embodiment, the edge caches do not have the request content fragment in its local content storage. In case of such kind of cache misses, an embodiment of the present invention will be described below with respect to Figs. 5-7.

Fig. 5 shows a schematic block diagram of a network topology according to another embodiment of the present invention. The description of network nodes that are similar to those described with respect to Fig. 1 will not be repeated here.

In Fig. 5 the edge caches 540 are communicatively connected to another ISP DNS 511 that is different from the ISP DNS 510 which the client 520 may query for a resolution of a content name. In another embodiment, the edge caches 540 may be also communicatively connected to the ISP DNS 510. In the following, the embodiments of the present invention will be described according to the network configuration in Fig. 5.

In Fig. 5, the ISP DNS 511 is responsible for content name resolution for another ISP, and is communicatively connected to the publisher name server 530.

In one embodiment, the ISP DNS 511 is a normal ISP DNS according to state of the art. It may query the publisher name server 530 to get resolution of the content name, and feed it back to the requesting entity.

In another embodiment, the ISP DNS 511 is working same as the ISP DNS 110 described above referring to Fig. 2. Namely, the ISP DNS 511 is additionally communicatively connected to an auxiliary node configured to optimize the resolution. The auxiliary node that the ISP DNS 511 is connected to may be same as the auxiliary node 550 which is connected to the ISP DNS 510 or may be denoted as auxiliary node 551 (not shown) that is different from the auxiliary node 550.

Both ISP DNS 510 and 511 may contain different location information for a content name. Namely, the resolution results can be different for a edge cache 540 asking for content name resolution and for a client 520 asking for resolution of the same name, because supposedly the historical storage information for both ISP DNS 510 and 511 will in general look different.

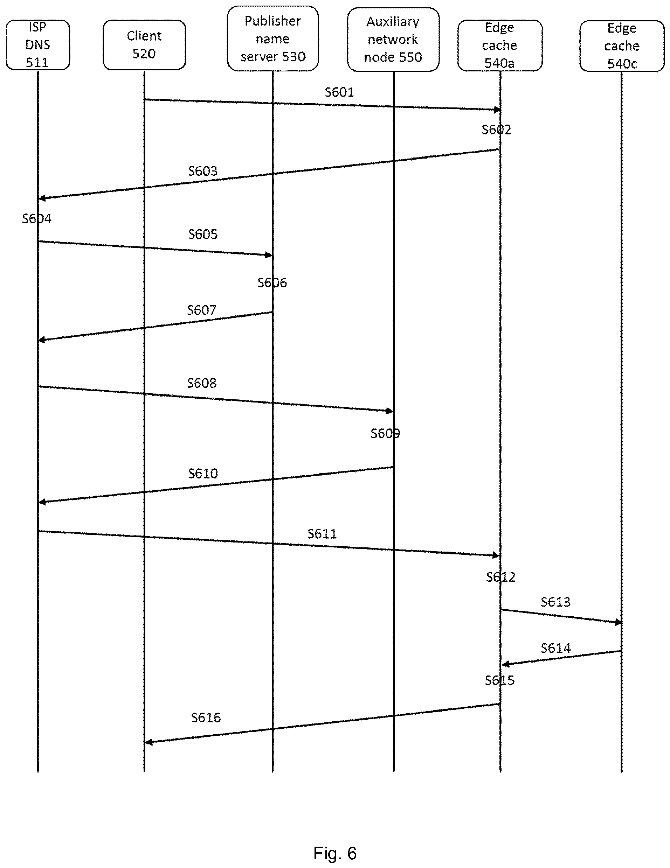

Fig. 6 shows a signal flow diagram of an embodiment according to the embodiment shown in Fig. 5. Wherein, the ISP DNS 511 is additionally communicatively connected to an auxiliary node 551 (not shown).

In step S601, the first edge cache 540a receives a third request from the client node 520, the third request comprising a content name of the requested content fragment. The third request may be transmitted from a normal client node, or a client node according to the present invention. Namely, in one embodiment, the client node may query a normal ISP DNS to get the location of the first edge cache 540a, however, the third request does not comprise a second set of edge cache(s) that shall deliver the requested content fragment. In another embodiment, the client node 520 may query an ISP DNS 510 according to the present invention as described above with respect to Fig. 2, to get the location of a second set of edge cache(s) that shall deliver the requested content fragment. The first edge cache 540a is selected by the client node 520 from the second set of edge cache(s), and the third request comprises the second set of edge cache(s). In yet another embodiment, the third request may be received from a second edge cache 540b in case of cache miss.

In step S602, the first edge cache 540a determines that the requested content fragment is not available in its local content storage. And the first edge cache 540a further determines whether the third request comprises a second set of edge cache(s) that shall deliver the requested content fragment. If so, the method may directly go to step S612 which will be described later. If the third request does not comprise a second set of edge cache(s), the first edge cache 540a transmits a fourth request requesting a resolution of the content name to the ISP DNS 511 in step S603. The fourth request comprises the content name comprised in the third request. In another embodiment, even if the third request comprises a second set of edge cache(s), the first edge cache 540a may still request for a resolution of the content name from the ISP DNS 511, so as to get an updated resolution result.

Steps S604-S610 in Fig. 6 are performed similar to steps S202-S208 as described with respect to Fig. 2.

Specifically, in step S604, the ISP DNS 511 determines a publisher name server 530 based on the content name comprised in the fourth request. In step S605, the ISP DNS 511 transmits a second request requesting a resolution of the content name to the publisher name server 530 determined based on the content name, the second request comprising the content name.

In step S606, the publisher name server 530 determines a first set of edge cache(s) that is capable of delivering the content fragment related to the content name based on the name-based content location information and the content name comprised in the second request. In step S607, the publisher name server 530 transmits a first resolution result indicating the content name and location of the first set of edge cache(s) to the ISP DNS 511.

In step S608, the ISP DNS 511 transmits the first resolution result to the auxiliary network node 551. The auxiliary network node 551 determines a second resolution result indicating the content name and location of a second set of edge cache(s) that shall deliver the content fragment related to the content name in step S609. The second set of edge cache(s) may comprise neighboring edge caches holding copies of the content fragment cached from prior requests of other clients.

After the second resolution result is transmitted back to the ISP DNS 511 in step S610, the ISP DNS 111 transmits the second resolution result to the first edge cache 540a in step S611.

A skilled person shall understand, in another embodiment, step S608-S610 may be omitted.

After the first edge cache 540a receives the second resolution result from the ISP DNS in step S611, or if the first edge cache 540a determines that the third request comprises the second set of edge cache(s) in step S602, then in step S612, the first edge cache 540a selects a third edge cache 540c from the second set of edge cache(s). The third edge cache 540c is different from the first edge cache 540a. In another embodiment, the first edge cache 540a receives the third request from a second edge cache 540b in step S601, then the selected third edge cache 540c is different from the second edge cache and any other edge cache that has already received the third request. In this way, the request is not going back to an edge cache that is on the network path of the initial request. Thus in case of a cache miss, hairpinning can be avoided. However, if among the second set of edge cache(s) there is no edge cache meeting the above mentioned condition, the first edge cache 540a still may forward the request to the higher-tier cache nodes, which normally have larger storage sizes and can keep more content items, for example a Mid-tier proxy 550a.

In another embodiment, the first edge cache 540a may select two or more third edge caches 540c, 540d, etc. Similar steps as described here with respect to Fig.6 may be also carried out by the selected third edge cache(s).

In Step S613, the first edge cache 540a transmits a fifth request requesting the content fragment to the third edge cache 540c, the fifth request comprising the content name and the second set of edge cache(s). In step S614, the first edge cache 540a receives the content fragment from the third edge cache 540c. In step S615, the first edge cache 540a stores the content fragment in the local content storage of the first edge cache 540a. In step S616, the first edge cache 540a transmits the content fragment to the client node 520. In another embodiment, the first edge cache 540a may perform step S616 prior to step S615.

In another embodiment, if in the step S601, the third request is received from a second edge cache 540b, then in step S616, the first edge cache 540a transmits the content fragment to the second edge cache 540b.

## Claims

1. A method of controlling a resolution in an internet service provider domain name server, ISP DNS (110), the method comprising steps of:
a) receiving from a first network node a first request requesting a resolution of a content name, the first request comprising the content name;
b) determining a publisher name server (130) based on the content name comprised in the first request;
c) transmitting a second request requesting a resolution of the content name to the publisher name server (130) determined based on the content name, the second request comprising the content name;
d) receiving from the publisher name server (130) a first resolution result indicating the content name and location of a first set of edge cache(s) that is capable of delivering a content fragment related to the content name;
e) transmitting the first resolution result to an auxiliary network node (150) configured to optimize the resolution of the content name;
f) receiving from the auxiliary network node (150) a second resolution result indicating the content name and location of a second set of edge cache(s) that shall deliver the content fragment related to the content name;
g) transmitting the second resolution result to the first network node.

2. A method according to claim 1, wherein, the first resolution result and the second resolution result are transmitted in a content-denoting DNS resource record type comprising fields indicating content name, content time to live value, and location information of the edge cache(s) that is capable of delivering the content fragment related to the content name.

3. A method according to claim 2, wherein, the first resolution result and the second resolution result further comprise fields indicating priority, and weight of the edge cache(s).

4. A method according to claim 1, the first network node is a client node (120, 520) or an edge cache (140, 540).

5. A method according to claim 1, after step f), the method further comprising a step of:
f1) caching the second resolution result in a historical storage;
after step a), the method further comprising a step of:
a1) determining whether there is an entry of the second resolution result for the content name in the historical storage,
a11) if so, the method going on with step g);
a12) if not so, the method going on with steps b)-g).

6. A method of resolving a content name in a publisher name server (130), comprising steps of:
a) receiving a name-based content location information published by a content provider,
b) receiving from an internet service provider domain name server, ISP DNS (110), a second request requesting a resolution of the content name, the second request comprising the content name;
c) determining a first set of edge cache(s) that is capable of delivering a content fragment related to the content name based on the name-based content location information and the content name comprised in the second request;
d) transmitting a first resolution result indicating the content name and location of the first set of edge cache(s) to the ISP DNS (110).

7. A method according to claim 6, the name-based content location information comprising entries of a content name and its corresponding location information of an edge cache that is capable of delivering the content fragment related to the content name.

8. A method according to claim 6, the name-based content location information further comprising priority, and weight of each edge cache.

9. A method according to claim 6, wherein, the name-based content location information is updated by the content provider based on a predetermined interval.

10. A method according to claim 8, the first resolution result comprising fields indicating content name, location information of at least one edge cache that is capable of delivering the content fragment related to the content name, priority, and weight of each of the edge cache.

11. A method of optimizing a resolution of a content name in an auxiliary network node (150), the auxiliary network node (150) being communicatively connected to an internet service provider domain name server, ISP DNS (110), and maintaining a historical record of a mapping from a content name to a set of edge cache(s) that is capable of delivering a content fragment related to the content name,
the method comprising steps of:
a) receiving from the ISP DNS (110), a first resolution result indicating a content name and location of a first set of edge cache(s) that is capable of delivering a content fragment related to the content name;
b) determining whether there is an entry in the historical record for the content name indicated in the first resolution result;
b1) if so, obtaining a third set of edge cache(s) corresponding to the content name in the entry, and further determining whether the third set of edge cache(s) is same as the first set of edge cache(s);
b11) if so, determining the first set of edge cache(s) or the third set of edge cache(s) as a second set of edge cache(s) that shall deliver the content fragment related to the content name;
b12) if not so, determining the second set of edge cache(s) that shall deliver the content fragment related to the content name based on the first set of edge cache(s) and the third set of edge cache(s) together, and adding a new entry comprising the content name and the first set of edge cache(s) into the historical record;
b2) if not so, determining the first set of edge caches as the second set of edge cache(s) that shall deliver the content fragment related to the content name, and adding a new entry comprising the content name and the first set of edge cache(s) into the historical record;
c) transmitting a second resolution result indicating the second set of edge cache(s) to the ISP DNS (110).

12. A method according to claim 11, wherein, the first resolution result and the second resolution result further comprise fields indicating priority, and weight of the edge cache(s), and
in step b12), the second set of edge cache(s) that shall deliver the content fragment related to the content name is determined based on priority, and weight of the edge cache(s) comprised in the first set and the third set of edge cache(s).

13. A method of requesting a content fragment in a client node (120), comprising steps of:
a) transmitting a first request requesting a resolution of a content name to an internet service provider domain name server, ISP DNS (110), the first request comprising the content name of the requested content fragment;
b) receiving from the ISP DNS (110) a second resolution result indicating the content name and a second set of edge cache(s) that shall deliver the requested content fragment;
c) selecting at least one edge cache (140a, 140b) from the second set of edge cache(s),
d) transmitting a third request requesting the content fragment to the selected edge cache(s) (140a, 140b), the third request comprising the content name and the second set of edge cache(s);
e) receiving the requested content fragment from the selected edge cache(s) (140a, 140b).

14. A method of delivering a content fragment in a first edge cache (540a) in a content distribution network, the first edge cache (540a) maintaining a local content storage,
the method comprising steps of:
a) receiving a third request requesting the content fragment from a requesting entity, the requesting entity being a client node (520) or a second edge cache (540b), the third request comprising a content name of the requested content fragment;
b) determining whether the request content fragment is available in the local content storage of the first edge cache;
b1) if so, sending the requested content fragment to the requesting entity;
b2) if not so, determining whether the third request comprises a second set of edge cache(s) that shall deliver the requested content fragment; if so, the method going on with steps b21)-b25);
b21) selecting at least one third edge cache(s) (540c) from the second set of edge cache(s), the third edge cache(s) (540c) being different from the first (540a) and the second edge cache (540b) and any other edge cache that has already received the third request;
b22) transmitting the third request to the third edge cache(s) (540c);
b23) receiving the content fragment from the third edge cache(s) (540c);
b24) storing the content fragment in the local content storage of the first edge cache (540a);
b25) transmitting the content fragment to the requesting entity.

15. A method according to claim 14, the first edge cache (540a) being communicatively connected to an internet service provider domain name server, ISP DNS (511), wherein, if it is determined in step b2) that the third request does not comprise a second set of edge cache(s), the method proceeds with steps c)-i):
c) transmitting a fourth request requesting a resolution of the content name to the ISP DNS (511), the fourth request comprising the content name comprised in the third request;
d) receiving from the ISP DNS (511) a second resolution result indicating the content name and a second set of edge cache(s) that shall deliver the requested content fragment;
e) selecting at least one third edge cache(s) (540c) from the second set of edge cache(s), the third edge cache(s) (540c) being different from the first (540a) and the second edge cache (540b) and any other edge cache that has already received the third request;
f) transmitting a fifth request requesting the content fragment to the third edge cache(s) (540c), the fifth request comprising the content name and the second set of edge cache(s);
g) receiving the content fragment from the third edge cache(s) (540c);
h) storing the content fragment in the local content storage of the first edge cache (540a);
i) transmitting the content fragment to the requesting entity.
